# EUROPÄISCHE PATENTSCHRIFT

(11) **EP 3 871 496 B1**
(45) Veröffentlichungstag und Bekanntmachung des Hinweises auf die Patenterteilung: **07.09.2022**
(21) Anmeldenummer: 20159692.1
(22) Anmeldetag: 27.02.2020
(51) Int. Cl.: A01K 29/00, G01G 17/08

(54) **SYSTEM UND VERFAHREN ZUM ERFASSEN DES GEWICHTS VON TIEREN**
SYSTEM AND METHOD FOR DETECTING ANIMALS FOR WEIGHTING PURPOSE
SYSTÈME ET PROCÉDÉ DE DÉTECTION DES ANIMAUX POUR DÉTERMINATION DE LEUR MASSE

(43) Veröffentlichungstag der Anmeldung: 01.09.2021
(73) Patentinhaber: Pixxize GmbH, 49699 Lindern (DE)
(72) Erfinder: Börries, Alexander, 50676 Köln (DE); Börries, Bernhard Ulrich, 28215 Bremen (DE)
(74) Vertreter: Wunderlich & Heim Patentanwälte Partnerschaftsgesellschaft mbB

(56) Entgegenhaltungen:
- EP-A1- 2 698 763
- WO-A1-2014/197631
- DE-A1- 19 918 100
- JP-A- 2016 059 300
- JP-A- 2019 194 573
- KR-B1- 102 062 609
- US-A1- 2010 222 684
- US-A1- 2011 196 661
- US-A1- 2018 042 584

## Beschreibung

Die Erfindung betrifft ein System zum Erfassen von Tieren gemäß dem Anspruch 1 sowie ein Verfahren zum Erfassen von Tieren gemäß dem Anspruch 6.

Insbesondere bei der Aufzucht von Nutztieren, beispielsweise der Schweine- oder der Rindermast, ist seitens des Züchters zu entscheiden, wann ein bestimmtes Tier einer weiteren Verwertung, etwa einem Verkauf oder einer Schlachtung, zugeführt werden kann. Ein Kriterium hierfür stellt insbesondere das Gewicht eines Tieres dar. Allerdings ist ein Wiegen eines Tieres auf einer Waage insbesondere bei größeren Tierbeständen eine aufwändige Maßnahme, die mit einem Zeit- und Kostenaufwand verbunden ist. Auch ist hierfür eine besondere Wiegeeinrichtung mit einer Zu- und Abführung für die Tiere vorzusehen. Darüber hinaus stellt ein Wiegevorgang mit der Zu- und Abführung der Tiere eine Belastung für diese dar.

In vielen Fällen wird daher von einem Züchter auch anhand des Augenscheines entschieden, wobei das Gewicht des Tieres abgeschätzt wird. Abhängig von der Erfahrung des Züchters kann es hierbei zu falschen Gewichtsabschätzungen und somit zu nicht sachgerechten Entscheidungen kommen.

Aus der Druckschrift US 2018/042584 ist ein gattungsbildendes System bekannt. Über einen 2D oder 3D Scan werden hier Daten zur Erkennung von Tieren aus deren morphologischen Eigenschaften oder über einen Identifikations-Tag ermittelt. Diese Daten werden voranalysiert, komprimiert und an eine externe Auswerteeinheit übermittelt. Allerdings wird es hier schwer im Display beim Betrachten des Tieres Daten zum identifizierten Tier anzuzeigen, die es dem Züchter oder Veterinär ermöglichen, die nächsten angemessenen Schritte einzuleiten.

Aus der WO 2014/197631 A1 ist ein gattungsgemäßes System bekannt.

Aus der EP2698763 A1 ist ein System gemäß dem Oberbegriff des unabhängigen Anspruchs 1 bekannt.

Der Erfindung liegt die **Aufgabe** zugrunde, ein System und ein Verfahren zum Erfassen von Tieren anzugeben, mit welchen besonders effizient ein Gewicht von Tieren bestimmt werden kann.

Nach der Erfindung wird die Aufgabe zum einen durch ein System mit den Merkmalen des Anspruchs 1 und zum anderen durch ein Verfahren mit den Merkmalen des Anspruchs 6 gelöst. Bevorzugte Ausführungsformen der Erfindung sind in den jeweils abhängigen Ansprüchen angegeben.

Gemäß der Erfindung ist ein System zum Erfassen von Tieren vorgesehen, welches mit einer 3D-Kameraeinheit, welche zum Erstellen mindestens eines dreidimensionalen Bildes eines Tieres ausgebildet ist, einer Rechnereinheit, welche zum Ermitteln eines Gewichtes des Tieres basierend auf dem mindestens einen dreidimensionalen Bild ausgebildet ist und mit einem Datenspeicher versehen ist, in welchem zu jedem Tier Gewichtsdaten abspeicherbar sind.

Eine Grundidee der Erfindung kann darin gesehen werden, das Gewicht eines Tieres nicht durch Wiegen sondern rechnerisch basierend auf einem oder mehreren Bildern einer 3D-Kameraeinheit zu ermitteln.

Die Kameraeinheit kann dabei eine elektronische Kamera sein, durch welche mindestens ein dreidimensionales Bild des Tieres erzeugbar ist. Hierbei kann ein elektronisch erzeugtes Bild in ein Tiefenbild sowie eine Punktwolke umgewandelt werden. Basierend auf diesem mindestens einen dreidimensionalen Bild kann eine Volumenbestimmung und damit eine Gewichtsbestimmung des Tieres erfolgen. Diese so erzeugten Gewichtsdaten können vorzugsweise einem bestimmten Tier zugeordnet und in einem Datenspeicher abgespeichert werden. Das System kann durch ein Smartphone verwirklicht werden, soweit dieses zum Erzeugen eines dreidimensionalen Bildes ausgebildet und mit einer entsprechenden Software versehen ist.

Eine besonders bevorzugte Ausführungsform der Erfindung besteht darin, dass zum Bilden eines mobilen Systems eine Trageinrichtung vorgesehen ist, an welcher zumindest die 3D-Kameraeinheit angeordnet ist und dass an der Trageinrichtung ein Energiespeicher zur Energieversorgung vorgesehen ist. Die Trageinrichtung ist insbesondere zum Tragen durch eine Person ausgebildet, so dass Bilder eines oder mehrerer Tiere frei Hand und ohne perspektivische Einschränkung erfasst und erzeugt werden können. Durch die Rechnereinheit kann anhand der so erfassten Bilder für jedes Tier eine Gewichtsdatenermittlung erfolgen. Die Trageinrichtung weist dabei einen Energiespeicher, insbesondere einen elektrischen Akkumulator, zur Energieversorgung der Kameraeinheit auf. Vorzugsweise ist auch eine Sende- und/oder Empfangseinheit vorgesehen, so dass die Kameraeinheit mit einer externen Einrichtung verbunden sein kann, welche insbesondere die Rechnereinheit und den Datenspeicher aufweisen kann. Grundsätzlich kann die Rechnereinheit und der Datenspeicher aber auch unmittelbar an der Trageinrichtung angeordnet sein.

Grundsätzlich kann die Trageinrichtung in einer beliebigen Weise ausgebildet sein, Besonders vorteilhaft ist es nach einer Weiterbildung der Erfindung, dass die Trageinrichtung einen Rucksack, eine Weste, einen Traggurt, eine Brille und/oder eine Kopfbedeckung aufweist. Die Trageinrichtung kann so von einer Person ohne größeren Aufwand getragen werden, wobei die mindestens eine Kameraeinheit so angeordnet ist, dass vorzugsweise eine Bilderfassung in Blickrichtung der Person erfolgt. Grundsätzlich können jedoch auch mehrere Kameraeinheiten mit unterschiedlichen Erfassungsrichtungen vorgesehen sein.

Erfindungsgemäß ist die 3D-Kameraeinheit, eine Zusatzeinrichtung und/oder die Rechnereinheit zum Identifizieren eines Tieres aus einer Gruppe von Tieren ausgebildet. Die Zusatzeinrichtung kann dabei beispielsweise eine Sende- oder Empfangseinrichtung sein, welche etwa mit einem am Tier befindlichen Transponder oder einer anderen Identifikationseinrichtung am Tier in Kommunikationsverbindung treten kann, um beispielsweise einen Identifikationscode des Tieres auszulesen. Alternativ oder ergänzend kann eine Identifikation des Tieres auch mittels der Kameraeinheit und/oder der Rechnereinheit erfolgen, wobei ein Tier an charakteristischen, individuellen Merkmalen erkannt werden kann. Eine Identifikation eines Tieres ermöglicht es, durch das System automatisch die erfassten Bild- und Gewichtsdaten zuverlässig einem bestimmten Tier zuzuordnen.

Besonders vorteilhaft ist es nach einer weiteren Ausführungsform der Erfindung, dass durch die Rechnereinheit weitere Daten erzeugbar sind, welche insbesondere einen Identifikationscode des Tieres, charakteristische Merkmale des Tieres und/oder Zeitpunkte zur Datenerfassung betreffen. Hierdurch können die ermittelten Gewichtsdaten sowie weitere Daten zuverlässig einem bestimmten Tier zu einem bestimmten Zeitpunkt zugeordnet werden. Somit kann zu einem Tier beispielsweise ein zeitlicher Verlauf der Gewichtsdaten zugeordnet werden. Dies erlaubt eine Aussage und auch eine Prognose zur weiteren Entwicklung des Tieres.

Erfindungsgemäß ist eine Ausgabeeinrichtung zum Ausgeben von tierbezogenen Daten vorgesehen. Die Ausgabeeinrichtungen können dabei leitungsgebunden oder drahtlos mit der Rechnereinheit in Verbindung stehen. Mittels einer Eingabeeinrichtung, welche beispielsweise eine Tastatur, ein Scanner oder eine sonstige Einrichtung sein kann, können beispielsweise zusätzliche Daten, etwa betreffend das Alter beziehungsweise eines Geburtsdatums des Tieres, der Rasse und weiteres eingegeben werden. Die Ausgabeeinrichtung kann ein Monitor, ein Drucker oder eine sonstige Ausgabeeinheit sein.

Erfindungsgemäß umfasst die Ausgabeeinrichtung ein visuelles Element, durch welches bei Betrachtung des mindestens einen Tieres unterstützend Daten oder Zeichen anzeigbar sind, welche zu dem Tier gespeichert oder in der Rechnereinheit erzeugt sind. Das visuelle Element kann insbesondere ein Monitor oder ein Display einer tragbaren Computereinheit, eines Tablet-Computers oder eines Smartphones oder insbesondere eine Brille sein, welche ein Einblenden oder Anzeigen der unterstützenden Daten oder Zeichen ermöglicht. Als visuelle Elemente können allgemein gebräuchliche Geräte und Einheiten eingesetzt werden, welche für virtual reality-Systeme hinlänglich bekannt sind. Insbesondere kann beispielsweise zu einem Tier, welches durch eine derartige Brille betrachtet wird, aktuell das Gewicht, das Alter, weitere Daten und/oder Handlungsanweisungen angezeigt werden.

Eine weitere bevorzugte Ausführungsform der Erfindung besteht darin, dass Parameterdaten hinterlegt sind und die Rechnereinheit ausgebildet ist, abhängig von den erfassten Daten und den Parameterdaten eine Handlungsanweisung betreffend das Tier auszugeben. Die Parameterdaten können dabei ein bestimmtes Zielgewicht oder einen Zielgewichtsbereich betreffen, wobei bei Erreichen des Gewichtes durch das System unmittelbar angezeigt wird, dass beispielsweise ein Verkauf oder eine Schlachtung des Tieres empfohlen wird. Die Parameterdaten können insbesondere auch Durchschnittswerte als Soll-Daten für eine Gewichtsentwicklung über die Zeit umfassen, so dass beispielsweise durch das System erkannt wird, wenn zu einem bestimmten Zeitpunkt ein Tier signifikant von den Soll-Daten abweicht. Dies kann beispielsweise als ein Hinweis für eine Krankheit oder eine Fehlbehandlung sein, so dass durch das System anzeigbar ist, etwa die Fütterung zu ändern oder eine veterinärmedizinische Maßnahme zu ergreifen oder dem Tier eine sonstige Sonderbehandlung zukommen zu lassen.

Hinsichtlich des erfindungsgemäßen Verfahrens zum Erfassen von Tieren ist vorgesehen, dass mittels einer 3D-Kameraeinheit mindestens ein dreidimensionales Bild eines Tieres erstellt wird, basierend auf dem mindestens einen dreidimensionalen Bild mittels einer Rechnereinheit ein Gewicht des Tieres ermittelt wird und für jedes Tier ermittelte Gewichtsdaten in einem Datenspeicher abgespeichert werden.

Das erfindungsgemäße Verfahren kann insbesondere mit dem zuvor beschriebenen System durchgeführt werden. Hierbei können die zuvor beschriebenen Vorteile erzielt werden.

Das erfindungsgemäße System bzw. das erfindungsgemäße Verfahren ist dazu eingerichtet, dass zumindest in einer Anfangsphase zumindest einzelne Tiere gewogen werden, und das so bestimmte Gewicht zusätzlich in die Rechnereinheit eingegeben wird und dass die Rechnereinheit das durch Wiegen bestimmte Gewicht mit den rechnerisch ermittelten Gewichtsdaten vergleicht, wobei bei einer Abweichung die Rechnereinheit einen hinterlegten Algorithmus zum Ermitteln der Gewichtsdaten aufgrund des erfassten Bildes ändert, so dass sich die rechnerisch ermittelten Gewichtsdaten dem durch Wiegen bestimmten Gewicht annähern oder entsprechen. Es kann hier ein System des Maschinenlearnings vorgesehen werden, wobei mittels eines Algorithmus die erfassten geometrischen Daten zu einem Tier zur Gewichtsbestimmung herangezogen werden. Dabei können auch verschiedene Algorithmen in Kombination vorgesehen sein, um auf Grundlage der erfassten Bilder eine möglichst genaue Gewichtsbestimmung zu erzielen. Die Ausgabe der Gewichtsdaten kann dabei in Echtzeit an die Ausgabeeinrichtung erfolgen.

Gemäß einer weiteren Verfahrensvariante der Erfindung ist es besonders vorteilhaft, das erfasste Ist-Daten eines Tieres mit vorgegebenen Soll-Daten, welche in dem Datenspeicher gespeichert oder durch die Rechnereinheit erzeugt sind, verglichen werden und durch die Rechnereinheit Informationen zur Behandlung des Tieres ermittelt und ausgegeben werden, etwa zur Fütterung, veterinärärztlicher Behandlung etc. So kann eine effiziente und schonende Mast eines Tieres erreicht werden.

Für eine hohe Datensicherheit ist es nach einer Weiterbildung der Erfindung vorgesehen, dass die erfassten Daten manipulationssicher gespeichert, insbesondere verschlüsselt werden.

Besonders zweckmäßig ist es dabei, dass die erfassten Daten dezentral als Blockchain abgespeichert werden. Durch die Blockchain lassen sich die Daten dezentral speichern und der exklusive Zugriff eines Einzelnen sowie Abhängigkeiten von einzelnen Stellen werden vermieden. Die Infrastruktur lässt sich zudem über verschiedene Stellen/Akteure verteilen und skalieren, ohne die Sicherheit zu kompromittieren.

Besonders vorteilhaft ist es nach einer Weiterbildung der Erfindung, dass Daten aus oder in der Rechnereinheit entsprechend vorgegebenen Rechten von Bedienern über eine Schnittstelle übertragen werden.

Insbesondere kann ein selbstverwaltetes Rechtemanagement auf Basis von Zertifikaten vorgesehen sein. Die Verschlüsselung und Zertifikate schützen die Datenhoheit und die Privatsphäre der einzelnen Akteure ohne Zutun oder die Kontrolle einer höheren Instanz, also einer Administration. Auf Basis der Zertifikate können Daten der Tiere etwa am Markt oder einem (elektronischen) Marktplatz übertragen und ein Zugriff auf diese Daten individuell gewährt werden. Dies kann beispielsweise beim Anbinden eines Veterinärs oder der Weitergabe von Gesundheitsdaten, etwa an einen Schlachter, zweckmäßig sein.

Darüber hinaus wird ein lückenloses Abbilden der gesamten Produktions- und Wertschöpfungskette ermöglicht. Da in der Blockchain kein Löschen von Daten vorgesehen und möglich ist, und vorherige Daten mit nachfolgenden Daten zur Absicherung verknüpft werden, kann der gesamte Werdegang eines Tieres lückenlos und fälschungssicher abgebildet werden.

Weiter ist eine Anbindung durch eine fremde und/oder eine eigene Schnittstelle (API) möglich. Weiter kann eine Anbindung von relevanten staatlichen und/oder institutionellen Stellen vorgesehen werden, was beispielsweise Veterinäre oder Seuchen- und Tierschutz betreffen kann. Zusätzlich kann eine eigene Schnittstelle zum Anbinden und Ermöglichen fremder Anwendungen vorgesehen sein, wie einem Enterprise-Resource-Planing (ERP). Die offene Anbindung kann dabei ein Höchstmaß an Nutzen und Marktdurchdringung ermöglichen (de facto Standard).

Weiterhin können angepasste Zugänge für verschiedene Rollen (Mäster, Züchter, Veterinär, Endkunde etc.) vorgesehen sein. Angepasste Zugänge können dabei mit abgegrenzten Funktionen vorgesehen werden, welche auf diese verschiedenen Rollen ausgerichtet sind. Darüber hinaus können spezielle Tools zur Auswertung und Nutzung der Daten vorgesehen sein, so ein Marktplatz mit Smart-contracts, eine Auswertung von Futternutzung, Wachstumsraten und anderen KPI und/oder Nachweise zur biologischen Aufzucht.

Besonders vorteilhaft ist es nach einer weiteren Ausführungsform der Erfindung, dass durch die Rechnereinheit weitere Daten erzeugbar sind, welche insbesondere einen Identifikationscode des Tieres, charakteristische Merkmale des Tieres und/oder Zeitpunkte zur Datenerfassung betreffen. Hierdurch können die ermittelten Gewichtsdaten sowie weitere Daten zuverlässig einem bestimmten Tier zu einem bestimmten Zeitpunkt zugeordnet werden.

Somit kann zu einem Tier beispielsweise ein zeitlicher Verlauf der Gewichtsdaten zugeordnet werden. Dies erlaubt eine Aussage und auch eine Prognose zur weiteren Entwicklung des Tieres.

Gemäß einer weiteren Ausführungsvariante der Erfindung ist es bevorzugt, dass eine Eingabeeinrichtung und/oder eine Ausgabeeinrichtung zum Eingeben beziehungsweise Ausgeben, insbesondere von tierbezogenen Daten, vorgesehen sind. Die Eingabe- und Ausgabeeinrichtungen können dabei leitungsgebunden oder drahtlos mit der Rechnereinheit in Verbindung stehen. Über die Eingabeeinrichtung, welche beispielsweise eine Tastatur, ein Scanner oder eine sonstige Einrichtung sein kann, können beispielsweise zusätzlich Daten, etwa betreffend das Alter beziehungsweise ein Geburtsdatum des Tieres, die Rasse, die Bezugsquelle etc. eingegeben werden. Die Ausgabeeinrichtung kann ein Monitor, ein Drucker oder eine sonstige Ausgabeeinheit sein.

Besonders vorteilhaft ist es dabei nach einer Weiterbildung der Erfindung, dass die Ausgabeeinrichtung ein visuelles Element umfasst, durch welches bei der Betrachtung des mindestens einen Tieres unterstützend Daten oder Zeichen anzeigbar sind, welche zu dem Tier gespeichert oder in der Rechnereinheit erzeugt sind. Das visuelle Element kann insbesondere ein Monitor oder ein Display oder insbesondere eine Brille sein, welche ein Einblenden oder Anzeigen der unterstützenden Daten oder Zeichen ermöglichen. Als visuelle Elemente können allgemein gebräuchliche Geräte und Einheiten eingesetzt werden, welche für Augmented Reality-Systeme hinlänglich bekannt sind.

Insbesondere kann beispielsweise zu einem Tier, welches durch eine derartige Brille betrachtet wird, aktuell das Gewicht, das Alter und eine Handlungsanweisung angezeigt werden.

Eine weitere bevorzugte Ausführungsform der Erfindung besteht darin, dass Parameterdaten hinterlegt sind und die Rechnereinheit ausgebildet ist, abhängig von den erfassten Daten und den Parameterdaten eine Handlungsanweisung betreffend zu dem Tier auszugeben. Die Parameterdaten können dabei ein bestimmtes Zielgewicht oder einen Zielgewichtsbereich betreffen, wobei bei Erreichen des Gewichtes durch das System unmittelbar angezeigt wird, dass beispielsweise ein Verkauf oder eine Schlachtung des Tieres empfohlen wird. Die Parameterdaten können insbesondere auch durchschnittliche Soll-Daten für eine Gewichtsentwicklung über die Zeit umfassen, so dass beispielsweise durch das System bekannt wird, wenn zu einem bestimmten Zeitpunkt ein Tier signifikant von den Soll-Daten abweicht. Dies kann beispielsweise als ein Hinweis für eine Krankheit oder eine Fehlbehandlung sein, so dass durch das System anzeigbar ist, etwa die Fütterung zu ändern oder eine veterinärmedizinische Maßnahme zu ergreifen oder dem Tier eine sonstige Sonderbehandlung zukommen zu lassen.

Hinsichtlich des erfindungsgemäßen Verfahrens zum Erfassen von Tieren ist vorgesehen, dass mittels einer 3D-Kameraeinheit mindestens ein dreidimensionales Bild eines Tieres erstellt wird, basierend auf dem mindestens einen dreidimensionalen Bild mittels einer Rechnereinheit ein Gewicht des Tieres ermittelt wird, und für jedes Tier ermittelte Gewichtsdaten in einem Datenspeicher abgespeichert werden.

Das erfindungsgemäße Verfahren kann insbesondere mit dem zuvor beschriebenen System durchgeführt werden. Hierbei können die zuvor beschriebenen Vorteile erzielt werden.

Eine bevorzugte Ausführungsvariante des erfindungsgemäßen Verfahrens besteht darin, dass zumindest in einer Anfangsphase zumindest einzelne Tiere gewogen werden und das so bestimmte Gewicht zusätzlich in die Rechnereinheit eingegeben wird und dass die Rechnereinheit das durch Wiegen bestimmte Gewicht mit den rechnerisch ermittelten Gewichtsdaten vergleicht, wobei bei einer Abweichung die Rechnereinheit einen hinterlegten Algorithmus zum Ermitteln der Gewichtsdaten aufgrund des erfassten Bildes ändert, so dass sich die rechnerisch ermittelten Gewichtsdaten dem durch Wiegen bestimmten Gewicht annähern oder entsprechen. Es kann hier ein System des Machine-Learnings vorgesehen werden, wobei mittels eines Algorithmus die erfassten geometrischen Daten zu einem Tier zur Gewichtsbestimmung herangezogen werden. Dabei können auch verschiedene Algorithmen in Kombination vorgesehen sein, um auf Grundlage der erfassten Bilder eine möglichst genaue Gewichtsbestimmung zu erzielen. Die Ausgabe der Gewichtsdaten kann dabei in Echtzeit an die Ausgabeeinrichtung erfolgen.

Gemäß einer weiteren Verfahrensvariante der Erfindung ist es besonders vorteilhaft, dass erfasste Ist-Daten eines Tieres mit vorgegebenen Soll-Daten, die in den Datenspeicher gespeichert oder durch die Rechnereinheit erzeugt sind, verglichen werden und durch die Rechnereinheit Informationen zur Behandlung des Tieres ermittelt und ausgegeben werden, etwa zu Fütterung, veterinärärztliche Behandlung etc. Hierdurch kann eine effiziente und schonende Aufzucht eines Tieres erreicht werden.

Für eine hohe Datensicherheit ist es nach einer Weiterbildung der Erfindung vorgesehen, dass die erfassten Daten manipulationssicher gespeichert, insbesondere verschlüsselt werden.

Besonders zweckmäßig ist es dabei, dass die erfassten Daten dezentral als Blockchain abgespeichert werden. Durch die Blockchain lassen sich die Daten dezentral speichern und der exklusive Zugriff eines Einzelnen sowie Abhängigkeiten von einzelnen Stellen werden vermieden. Die Infrastruktur lässt sich zudem über verschiedene Stellen/Akteure verteilen und skalieren, ohne die Sicherheit zu kompromittieren.

Insbesondere kann ein selbstverwaltetes Rechtemanagement auf Basis von Zertifikaten vorgesehen sein. Die Verschlüsselung die Zertifikate schützen die Datenhoheit und die Privatsphäre der einzelnen Akteure ohne Zutun oder die Kontrolle einer höheren Instanz, also einer Administration. Auf Basis der Zertifikate können Tiere etwa am Markt oder einem (elektronischen) Marktplatz übertragen und ein Zugriff auf Daten individuell gewährt werden. Dies kann beispielsweise beim Anbinden eines Veterinärs oder der Weitergabe von Gesundheitsdaten, etwa an einen Schlachter, zweckmäßig sein.

Darüber hinaus wird ein lückenloses Abbilden der gesamten Produktions- und Wertschöpfungskette ermöglicht. Da in der Blockchain kein Löschen von Daten vorgesehen und möglich ist und vorherige Daten mit nachfolgenden Daten zur Absicherung verknüpft werden, kann der gesamte Werdegang eines Tieres lückenlos und fälschungssicher abgebildet werden.

Besonders vorteilhaft ist es nach einer Weiterbildung der Erfindung, dass Daten aus oder in der Rechnereinheit entsprechend vorgegebenen Rechten von Bedienern über eine Schnittstelle übertragen werden.

Weiter ist eine Anbindung durch Fremde und/oder eine eigene Schnittstelle (API) möglich. Weiter kann eine Anbindung von relevanten staatlichen und/oder institutionellen Stellen vorgesehen werden, was beispielsweise Veterinäre oder Seuchen- und Tierschutz betreffen kann. Zusätzlich kann eine eigene Schnittstelle zum Anbinden und Ermöglichen fremder Anwendungen vorgesehen sein, wie einem Enterprise-Resource-Planing (ERP). Die offene Anbindung kann dabei ein Höchstmaß an Nutzen und Marktdurchdringung ermöglichen (de facto-Standard).

Weiterhin können angepasste Zugänge für verschiedene Rollen (Mäster, Züchter, Veterinär, Endkunde etc.) vorgesehen sein. Angepasste Zugänge können dabei mit abgegrenzten Funktionen vorgesehen werden, welche auf diese verschiedenen Rollen ausgerichtet sind. Darüber hinaus können spezielle Tools zur Auswertung und Nutzung der Daten vorgesehen sein, so ein Marktplatz mit Smart-contracts, eine Auswertung von Futternutzung, Wachstumsraten und anderen KPI und/oder Nachweise zur biologischen Aufzucht.

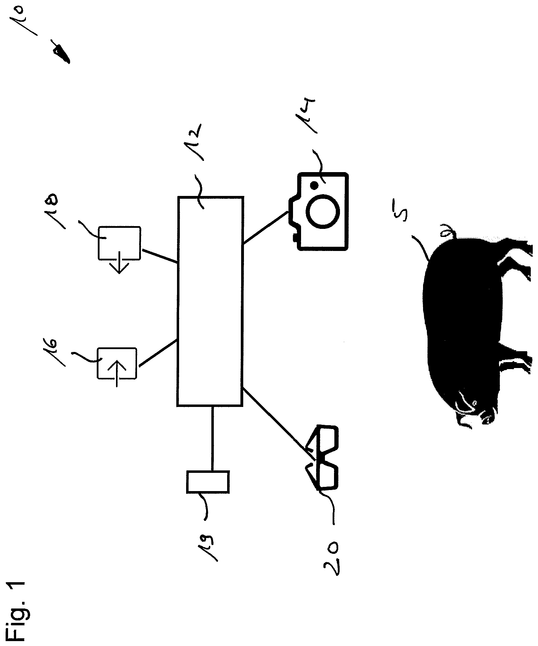

Ein bevorzugtes Ausführungsbeispiel eines erfindungsgemäßen Systems 10 ist schematisch in der beigefügten Fig. 1 dargestellt. Das System 10 umfasst eine Rechnereinheit 12, in welcher ein Datenspeicher integriert ist. Der Rechner 12 kann eine übliche Computereinheit sein. Vorzugsweise in drahtloser Verbindung mit der Rechnereinheit 12 steht eine dreidimensionale Kameraeinheit 14, welche ein oder mehrere Objektive aufweisen kann. Mittels der 3D-Kameraeinheit 14 kann ein dreidimensionales Bild eines Tieres 5 erzeugt werden. Dieses dreidimensionale Bild kann in der 3D-Kameraeinheit 14 oder insbesondere in der Rechnereinheit 12 zur Ermittlung eines Gewichtes des Tieres basierend auf einem hinterlegten lernfähigen Algorithmus herangezogen werden. Ermittelte Gewichtsdaten können durch das erfindungsgemäße System 10 vorzugsweise in Echtzeit an ein visuelles Element 20 ausgegeben werden, welches insbesondere eine Augmented oder Virtual-Reality-Brille sein kann, die von einem Nutzer getragen wird.

Das System 10 kann dabei vorzugsweise zumindest teilweise an einer Trageinrichtung vorgesehen sein, welche von einer Nutzerperson unmittelbar getragen wird. An der Trageinrichtung ist insbesondere die 3D-Kameraeinheit 14 mit einer entsprechenden Datenkommunikationseinheit und einer Energieversorgungseinheit vorgesehen. Vorzugsweise kann auch zumindest ein Teil der Rechnereinheit 12 an der Trageinrichtung angeordnet sein. Hierdurch können einem Nutzer insbesondere beim Begehen eines Stalles unmittelbar zu einem betrachteten Tier ein ermitteltes Gewicht sowie weitere Daten angezeigt werden.

Über eine Eingabeeinrichtung 16 können weitere Daten in das System 10 und insbesondere in die Rechnereinheit 12 eingegeben werden, so dass diese ebenfalls über das visuelle Element 20 zu einem betrachteten Tier angezeigt werden können. Ergänzend können eine oder mehrere Ausgabeeinrichtungen 18 vorgesehen sein, mit welchen abgespeicherte und/oder ermittelte Daten aus der Rechnereinheit 12 ausgegeben werden können.

Alternativ oder ergänzend kann eine Schnittstelle 19 für weitere Eingabe- und/oder Ausgabeeinheiten vorgesehen sein.

## Patentansprüche

1. System zum Erfassen von Tieren (5) mit
- einer 3D-Kameraeinheit (14), welche zum Erstellen mindestens eines dreidimensionalen Bildes eines Tieres (5) ausgebildet ist,
- einer Rechnereinheit (12), welche zum Ermitteln eines Gewichtes des Tieres (5) basierend auf dem mindestens einen dreidimensionalen Bild ausgebildet ist, und
- einem Datenspeicher, in welchem zu jedem Tier (5) Gewichtsdaten abspeicherbar sind,
- wobei die 3D-Kameraeinheit (14), eine Zusatzeinrichtung und/oder die Rechnereinheit (12) zum Identifizieren eines Tieres (5) aus einer Gruppe von Tieren (5) ausgebildet ist,
- wobei eine Ausgabeeinrichtung (18) zum Ausgeben von tierbezogenen Daten vorgesehen ist,
- wobei die Ausgabeeinrichtung (18) ein visuelles Element (20) umfasst, durch welches bei Betrachtung des mindestens einen Tieres (5) unterstützend Daten anzeigbar sind, welche zu dem Tier (5) gespeichert oder in der Rechnereinheit (12) erzeugt sind,
**dadurch gekennzeichnet,**
**dass** das System derart eingerichtet ist, dass zumindest in einer Anfangsphase zumindest einzelne Tiere (5) gewogen werden und das so bestimmte Gewicht zusätzlich in die Rechnereinheit (12) eingebbar ist
und
**dass** die Rechnereinheit (12) dazu eingerichtet ist, das durch Wiegen bestimmte Gewicht mit den rechnerisch ermittelten Gewichtsdaten zu vergleichen, wobei bei einer Abweichung die Rechnereinheit (12) dazu eingerichtet ist, einen hinterlegten Algorithmus zum Ermitteln der Gewichtsdaten aufgrund des erfassten Bildes ändert, so dass sich die rechnerisch ermittelten Gewichtsdaten dem durch Wiegen bestimmten Gewicht annähern oder entsprechen.

2. System nach Anspruch 1,
**dadurch gekennzeichnet,**
**dass** zum Bilden eines mobilen Systems (10) eine Trageinrichtung vorgesehen ist, an welcher zumindest die 3D-Kameraeinheit (14) angeordnet ist, und
**dass** an der Trageinrichtung ein Energiespeicher zur Energieversorgung vorgesehen ist.

3. System nach Anspruch 2,
**dadurch gekennzeichnet,**
**dass** die Trageinrichtung einen Rucksack, eine Weste, einen Tragegurt, eine Brille und/oder eine Kopfbedeckung aufweist.

4. System nach einem der Ansprüche 1 bis 3,
**dadurch gekennzeichnet,**
**dass** die Rechnereinheit (12) dazu ausgelegt ist, weitere Daten zu erzeugen, welche insbesondere einen Identifikationscode des Tieres (5), charakteristische Merkmale des Tieres (5) und/oder Zeitpunkte zur Datenerfassung betreffen.

5. System nach einem der Ansprüche 1 bis 4,
**dadurch gekennzeichnet,**
**dass** Parameterdaten hinterlegt sind und die Rechnereinheit (12) ausgebildet ist, abhängig von den erfassten Daten und den Parameterdaten eine Handlungsanweisung betreffend zu dem Tier (5) auszugeben.

6. Verfahren zum Erfassen von Tieren (5) mit einem System (10) nach einem der Ansprüche 1 bis 5,
- wobei mittels einer 3D-Kameraeinheit (14) mindestens ein dreidimensionales Bild eines Tieres (5) erstellt wird,
- basierend auf dem mindestens einen dreidimensionalen Bild mittels einer Rechnereinheit (12) ein Gewicht des Tieres (5) ermittelt wird und
- für jedes Tier (5) ermittelte Gewichtsdaten in einem Datenspeicher abgespeichert werden.

7. Verfahren nach Anspruch 6,
**dadurch gekennzeichnet,**
**dass** zumindest in einer Anfangsphase zumindest einzelne Tiere (5) gewogen werden und das so bestimmte Gewicht zusätzlich in die Rechnereinheit (12) eingegeben wird
und
**dass** die Rechnereinheit (12) das durch Wiegen bestimmte Gewicht mit den rechnerisch ermittelten Gewichtsdaten vergleicht, wobei bei einer Abweichung die Rechnereinheit (12) einen hinterlegten Algorithmus zum Ermitteln der Gewichtsdaten aufgrund des erfassten Bildes ändert, so dass sich die rechnerisch ermittelten Gewichtsdaten dem durch Wiegen bestimmten Gewicht annähern oder entsprechen.

8. Verfahren nach Anspruch 6 oder 7,
**dadurch gekennzeichnet,**
**dass** erfasste Ist-Daten eines Tieres (5) mit vorgegebenen Soll-Daten, welche in dem Datenspeicher gespeichert oder durch die Rechnereinheit (12) erzeugt sind, verglichen werden und durch die Rechnereinheit (12) Informationen zur Behandlung des Tieres (5) ermittelt und ausgegeben werden, etwa zur Fütterung, veterinärärztlicher Behandlung etc.

9. Verfahren nach einem der Ansprüche 6 bis 8,
**dadurch gekennzeichnet,**
**dass** die erfassten Daten manipulationssicher gespeichert, insbesondere verschlüsselt werden.

10. Verfahren nach einem der Ansprüche 6 bis 9,
**dadurch gekennzeichnet,**
**dass** die erfassten Daten dezentral als Blockchain abgespeichert werden.

11. Verfahren nach einem der Ansprüche 6 bis 10,
**dadurch gekennzeichnet,**
**dass** Daten aus oder in der Rechnereinheit (12) entsprechend vorgegebenen Rechten von Bedienern über eine Schnittstelle (19) übertragen werden.

## Claims

1. A system for sensing animals (5) with
- a 3D camera unit (14) which is designed to create at least one three-dimensional image of an animal (5),
- a computer unit (12) which is designed to determine a weight of the animal (5) on the basis of the at least one three-dimensional image, and
- a data memory, in which weight data can be stored for each animal (5),
- wherein the 3D camera unit (14), an auxiliary device and/or the computer unit (12) is designed to identify an animal (5) from a group of animals (5),
- wherein an output device (18) is provided to output animal-related data,
- wherein the output device (18) comprises a visual element (20), by means of which, during the observation of the at least one animal (5), data that have been stored for the animal (5) or that have been generated in the computer unit (12) can be displayed as supplementary data,
**characterised in that**
the system is set up in such a way that, at least in an initial phase, at least individual animals (5) are weighed and the weight thus determined can be input additionally into the computer unit (12), and
**in that** the computer unit (12) is set up to compare the weight determined by weighing with the computer-determined weight data, wherein, if there is a deviation, the computer unit (12) is set up to change a stored algorithm for determining the weight data on the basis of the captured image, so that the computer-determined weight data approximate or correspond to the weight determined by weighing.

2. The system according to claim 1,
**characterised in that**
in order to form a mobile system (10), a carrying device is provided, on which at least the 3D camera unit (14) is arranged, and
**in that** an energy storage device for supplying energy is provided on the carrying device.

3. The system according to claim 2,
**characterised in that**
the carrying device comprises a backpack, a vest, a carry strap, a pair of glasses and/or a head covering.

4. The system according to one of claims 1 to 3,
**characterised in that**
the computer unit (12) is designed to generate further data, which in particular relate to an identification code of the animal (5), characteristic features of the animal (5), and/or points in time for data capture.

5. The system according to one of claims 1 to 4,
**characterised in that**
parameter data are stored and the computer unit (12) is designed to output an instruction for action relating to the animal (5) depending on the captured data and the parameter data.

6. A method for detecting animals (5) with a system (10) according to one of claims 1 to 5,
- wherein at least one three-dimensional image of an animal (5) is created by means of a 3D camera unit (14),
- a weight of the animal (5) is determined on the basis of the at least one three-dimensional image by means of a computer unit (12), and
- weight data determined for each animal (5) are stored in a data memory.

7. The method according to claim 6,
**characterised in that**
at least in an initial phase, at least individual animals (5) are weighed and the weight thus determined is input additionally into the computer unit (12), and
**in that** the computer unit (12) compares the weight determined by weighing with the computer-determined weight data, wherein, if there is a deviation, the computer unit (12) changes a stored algorithm for determining the weight data on the basis of the captured image, so that the computer-determined weight data approximate or correspond to the weight determined by weighing.

8. The method according to claim 6 or 7,
**characterised in that**
detected actual data of an animal (5) are compared with predefined target data that are stored in the data memory or that are generated by the computer unit (12), and information regarding the treatment of the animal (5) is determined and output by the computer unit (12), for example relating to feed, veterinary treatment, etc.

9. The method according to one of claims 6 to 8,
**characterised in that**
the detected data are stored in a tamper-proof manner, in particular in encrypted form.

10. The method according to one of claims 6 to 9,
**characterised in that**
the captured data are stored in a decentralised manner as a blockchain.

11. The method according to one of claims 6 to 10,
**characterised in that**
data are transferred via an interface (19) from or in the computer unit (12) according to predefined rights of operators.

## Revendications

1. Système de détection d'animaux (5) comportant :
- une unité de caméra en 3D (14) qui est réalisée pour créer au moins une image en trois dimensions d'un animal (5),
- une unité informatique (12) qui est réalisée pour la détermination d'un poids de l'animal (5) sur la base de l'au moins une image en trois dimensions, et
- une mémoire de données, dans laquelle des données de poids peuvent être enregistrées pour chaque animal (5),
- dans lequel l'unité de caméra en 3D (14), un dispositif supplémentaire et/ou l'unité informatique (12) sont configurés pour l'identification d'un animal (5) à partir d'un groupe d'animaux (5),
- dans lequel un dispositif de sortie (18) est prévu pour la sortie de données liées à l'animal,
- dans lequel le dispositif de sortie (18) comporte un élément visuel (20), par lequel lors de l'observation d'au moins un animal (5) des données peuvent être affichées en soutien, lesquelles sont enregistrées pour l'animal (5) ou sont générées dans l'unité informatique (12),
**caractérisé en ce que**
le système est conçu de telle manière qu'au moins dans une phase initiale au moins des animaux individuels (5) sont pesés et le poids ainsi défini peut être entré en outre dans l'unité informatique (12) et
**en ce que** l'unité informatique (12) est conçue afin de comparer le poids défini par la pesée avec les données de poids déterminées par ordinateur, dans lequel en cas de divergence l'unité informatique (12) est conçue afin de modifier un algorithme enregistré pour la détermination des données de poids en raison de l'image détectée de sorte que les données de poids déterminées par ordinateur s'approchent ou correspondent au poids défini par la pesée.

2. Système selon la revendication 1,
**caractérisé en ce que**
pour la formation d'un système mobile (10) un dispositif porteur est prévu, au niveau duquel au moins l'unité de caméra 3D (14) est agencée, et
**en ce qu'**au niveau du dispositif porteur un accumulateur d'énergie est prévu pour l'alimentation en énergie.

3. Système selon la revendication 2,
**caractérisé en ce que**
le dispositif porteur présente un sac à dos, une veste, une bandoulière, des lunettes et/ou un couvre-chef.

4. Système selon l'une des revendications 1 à 3,
**caractérisé en ce que**
l'unité informatique (12) est conçue afin de générer d'autres données qui concernent en particulier un code d'identification de l'animal (5), des particularités caractéristiques de l'animal (5) et/ou des moments de détection de données.

5. Système selon l'une des revendications 1 à 4,
**caractérisé en ce que**
des données de paramètre sont enregistrées et l'unité informatique (12) est réalisée afin de sortir en fonction des données détectées et des données de paramètre une instruction de manipulation concernant l'animal (5).

6. Procédé de détection d'animaux (5) avec un système (10) selon l'une des revendications 1 à 5,
- dans lequel au moins une image en trois dimensions d'un animal (5) est réalisée au moyen d'une unité de caméra en 3D (14),
- sur la base de l'au moins une image en trois dimensions un poids de l'animal (5) est déterminé au moyen d'une unité informatique (12) et
- des données de poids déterminées pour chaque animal (5) sont enregistrées dans une mémoire de données.

7. Procédé selon la revendication 6,
**caractérisé en ce que**
au moins dans une phase initiale, au moins des animaux individuels (5) sont pesés et le poids ainsi déterminé est en outre saisi dans l'unité informatique (12),
et
**en ce que** l'unité informatique (12) compare le poids défini par la pesée avec les données de poids déterminées par ordinateur, dans lequel en cas de divergence l'unité informatique (12) est conçue afin de modifier un algorithme enregistré pour la détermination des données de poids en raison de l'image détectée de sorte que les données de poids déterminées par ordinateur s'approchent ou correspondent au poids déterminé par la pesée.

8. Procédé selon la revendication 6 ou 7,
**caractérisé en ce que**
des données réelles détectées d'un animal (5) sont comparées avec des données de consigne prédéfinies qui sont enregistrées dans la mémoire de données ou générées par l'unité informatique (12) et des informations sont déterminées et sorties pour le traitement de l'animal (5), par exemple pour une alimentation, un traitement vétérinaire, etc. par l'unité informatique (12).

9. Procédé selon l'une des revendications 6 à 8,
**caractérisé en ce que**
les données détectées sont enregistrées à l'abri des manipulations, en particulier chiffrées.

10. Procédé selon l'une des revendications 6 à 9,
caractérisé en ce les données détectées sont enregistrées de manière décentralisée comme chaîne de blocs.

11. Procédé selon l'une des revendications 6 à 10,
**caractérisé en ce que**
